# EUROPEAN PATENT APPLICATION

(11) **EP 4 365 343 A1**
(43) Date of publication of application: **08.05.2024**
(21) Application number: 21947702.3
(22) Date of filing: 06.07.2021
(51) Int. Cl.: D04B 1/14, D04B 1/16

(54) **MULTI-SCENE HOT-WET COMFORT FUNCTIONAL KNITTED FABRIC, AND PREPARATION METHOD THEREFOR**

(30) Priority: 02.07.2021 CN 202110753735
(71) Applicant: Dongguan Best Pacific Textile Ltd., Guangdong 523000 (CN)
(72) Inventor: HU, Junyan, Dongguan, Guangdong 523000 (CN); ZHAI, Guojun, Dongguan, Guangdong 523000 (CN); ZHAO, Xiaojuan, Dongguan, Guangdong 523000 (CN); CHEN, Changrong, Dongguan, Guangdong 523000 (CN); LIU, Ridong, Dongguan, Guangdong 523000 (CN); HE, Xiande, Dongguan, Guangdong 523000 (CN); LI, Yang, Dongguan, Guangdong 523000 (CN); CHEN, Bin, Dongguan, Guangdong 523000 (CN)
(74) Representative: Jacobi, Markus Alexander
(86) International application number: PCT/CN2021/104848
(87) International publication number: WO 2023/272758

(57) **Abstract**

This application discloses a multi-scene, thermal and moisture-comfortable functional knitted fabric, comprising a fabric body, wherein the fabric body includes at least two yarns: (1)Y₁ the first yarn (denier D1, filament F1) and (2)Y₂ the second yarn (denier D2, and filament F2), and one of the yarns is a light-absorbing heat-generating yarn;Y1 the denier of the first yarn is inconsistent withY₂ the denier of the second yarn, and it is divided into roving yarn and spun yarn; the roving yarn and the spun yarn are made of D_{Thick}:D_{Fine} ≥ 1.2, F_{Thick}:F_{Fine} ≤ 0.9 yarn (ie: high-filament yarn The thread has a small denier); and the roving yarn and the spun yarn in a unit cycle organization are arranged at intervals of the ratio of 2.0≥m_{thick}:n_{fine}≥0.3, and m_{thick}≤2.0, n_{fine}≤6.0 ( In the formula, m is a yarn with a thick denier and n is a yarn with a fine denier); woven into a thermal comfort function that can absorb and convert radiation energy into heat energy and the one way transfer capacity on both sides of the liquid water fabric ( OWTC) ≥100% of the fast-drying fabric body. This application has the following different functions during the wearing process: in the low metabolism stage, it reduces the heat loss in the form of radiation, and converts it into heat energy to improve the warmth retention effect; in the high metabolism stage, the differential moisture conduction of the fabric facilitates the sweat from the body surface Drain to the surface of the fabric, increase the dryness of the fabric inner bottom, and increase the evaporation rate of liquid water; in the recovery stage after exercise, the use of differential moisture conduction and increasing the fabric temperature are more conducive to shorten the drying process of the fabric to reduce the uncomfortable feeling of wet and cold after exercise.

## Description

### Technical field

The present application belongs to the technical field of textile fabrics, and relates to a multi-scene, thermal and moisture-comfortable functional knitted fabric with differential moisture conduction and quick drying on both sides of a liquid water fabric with light absorption and heat generation.

### BACKGROUND OF THE INVENTION

With the improvement of living standards, the diversification of consumers' lives has resulted in the need to quickly switch between multiple life, leisure and work scenes. Therefore, there is a strong demand for functional fabrics that can adapt to the needs of multiple scenes. Especially for autumn and winter fabrics, the current research on how to balance warmth and heat dissipation, sports and aesthetics is the focus of recent research.

Regarding warmth: Patent application 202011623625.5, "A five-layer structure hollow thermal insulation cotton-polyester fleece fabric and its weaving method" discloses a five-layer structure hollow thermal insulation cotton-polyester fleece fabric consisting of a first surface layer, a second surface layer and a connection The air layer of the first surface layer and the second surface layer; the first surface layer includes a first spun yarn and a second spun yarn, the connecting yarn is connected to the second spun yarn, the first A spinning yarn is arranged on the side away from the air layer; the second surface layer includes a third spinning yarn and a fourth spinning yarn. The above-mentioned thermal insulation fabric is realized by increasing the thickness of the fabric, but the increase in the thickness often brings about an increase in the weight of the clothing, and at the same time, it also brings a visual bloat. There have been extensive researches on how to improve the thermal insulation per unit thickness of the material. For example, hollow polyester fiber has the characteristics of thermal insulation and light weight. The finishing process after raising treatment increases the thickness of the fabric, and at the same time enables the fabric to carry more still air, thereby enhancing the warmth retention performance of the fabric. The larger the volume of air contained in the clothing fabric, the less the heat loss through conduction, and the better the warmth retention effect; due to the poor blocking effect of air on radiant heat, it is usually used to increase the fiber volume in the warming material or use it to reflect infrared or materials with absorbing function; by reducing the air flow in its internal structure, the use of materials with a large specific surface area can better hinder air flow to reduce heat dissipation.

Regarding heat dissipation: It is well known that the heat dissipation function needs to be enhanced during exercise, and the excess heat generated during exercise will accumulate in the body and cause sweating. A large number of prior studies have also conducted extensive research on the influence of sweat transfer characteristics in fabrics on comfort.

Patent application 201922433023.2, "a unidirectional moisture-conducting fabric" discloses a unidirectional moisture-conducting fabric including a waterproof inner layer, a unidirectional wetting point, a fabric inner layer, a fabric surface, and a hydrophilic outer layer. The waterproof inner layer and the unidirectional moisture-conducting fabric The point is located in the innermost layer and is in contact with the human body; the waterproof inner layer is compounded on the inner side of the inner layer of the fabric through the printing process as a unidirectional wet point; the hydrophilic outer layer is compounded on the outermost surface of the fabric through the dipping-pad-baking-baking process ; So as to realize the one-way wet function.

Patent application 201710056898.8, "An elastic water-absorbent quick-drying knitted fabric and its use", discloses a knitted fabric with a surface layer and an inner layer; the yarns of the surface layer and the inner layer are all polyester elastic fibers; At least one layer of the layer is composed of two different knitting actions, A part and B part, the B part is formed by a non-loop knitting action; the water absorption speed of the knitted fabric is less than 3 seconds, and the water absorption and diffusion area ratio of the surface layer and the inner layer Above 3.0, the water retention rate of the inner layer is less than 20%.

Patent application 201811027306.0, "a multifunctional unidirectional moisture-conducting fabric", discloses a multifunctional unidirectional moisture-conducting double-sided knitted mesh fabric. The inner layer of the fabric uses polyethylene yarn or polyethylene composite fiber yarn, such as: polyethylene /Polyamide, polyethylene/polyester, polyethylene/polypropylene, the mesh structure is formed by the tuck weaving method; the outer layer uses yarns with good water absorption, such as cotton yarn, hemp yarn, regenerated cellulose fiber yarn , Polyester yarn, woven into a plain weave structure; the surface area of the outer layer of the fabric is larger than that of the inner layer, which has the function of ice-cooling, smoothness and unidirectional moisture conduction.

Life often involves the rapid transition of scenes, such as (1) the transition between a warn shopping mall and a cold street; (2) the transition between sports venues and lounges; (3) a stuffy kitchen and a comfortable living room. Scene transitions are often accompanied by rapid temperature changes, so it is necessary to develop a clothes made of fabrics that are suitable for multi-scene environments and can balance warmth and heat dissipation for the human body. Although the prior art has studied a large number of warmth preservation and perspiration solutions, there are few reports on how to achieve a balance between the heat dissipation and perspiration requirements under the high metabolism state and the warmth retention requirements under the low and high metabolism state in a multi-scenario life mode.

### DESCRIPTION OF THE INVENTION

Concerning the above shortcomings, this invention has fully analyzed the needs of multiple application circumstances and summarized them as follows:
It can be seen from the above that how to achieve a higher thermal

| Exercise phase, project | Low-volume exercise | High-volume exercise | Recovery after exercise |
|---|---|---|---|
| Metabolic rate | Low metabolism | High metabolism | Low metabolism |
| Sweating state | Gaseous state | liquid state | Change from liquid to gas within a certain period of time |
| Physiological needs | Keeping warm | Perspiration, heat dissipation | Quick-drying and keeping warm |
| Fabric dry and wet state | Dry | Wet | From wet to dry |
| Fabric thermal resistance | High | Low | From low to high |

insulation effect with a lower fabric weight and thickness under the condition of the same environmental factors; keep the inner surface of the fabric dry under the condition of sweating and achieve heat dissipation through rapid and effective evaporation effect; and the key to this application is to evaporate the moisture in the fabric as soon as possible during the recovery period, and to improve the thermal resistance of the fabric. Specific analysis principles: (1) Under the premise that the environmental conditions are unchanged and the fabric thickness is unchanged or reduced, the total amount of heat transferred by convection and conduction is basically the same. Even when the thickness is reduced, the conduction and heat dissipation will be further enhanced. Therefore, it is one of the feasible methods to reduce heat dissipation, especially to reduce the radiant heat dissipation of the fabric; (2) At the same time, it is another way to use energy conversion materials to absorb the radiant energy in the environment and convert it into perceivable heat energy to improve the warmth retention effect; (3) After sweating, the fabric contains water. The existence of this liquid water destroys the original fabric's thermal insulation properties, reduces thermal resistance and enhances the heat dissipation effect. However, this feature makes people feel wet and cold during the recovery phase of stopping motion. Sticking to the body often causes a cold. Therefore, the differential moisture conduction function of the two sides of the fabric and the increased temperature strengthen the evaporation of sweat, and the drying time of the fabric is further shortened. Therefore, the third focus is to reduce the moisture content in the fabric faster in the recovery phase of exercise.

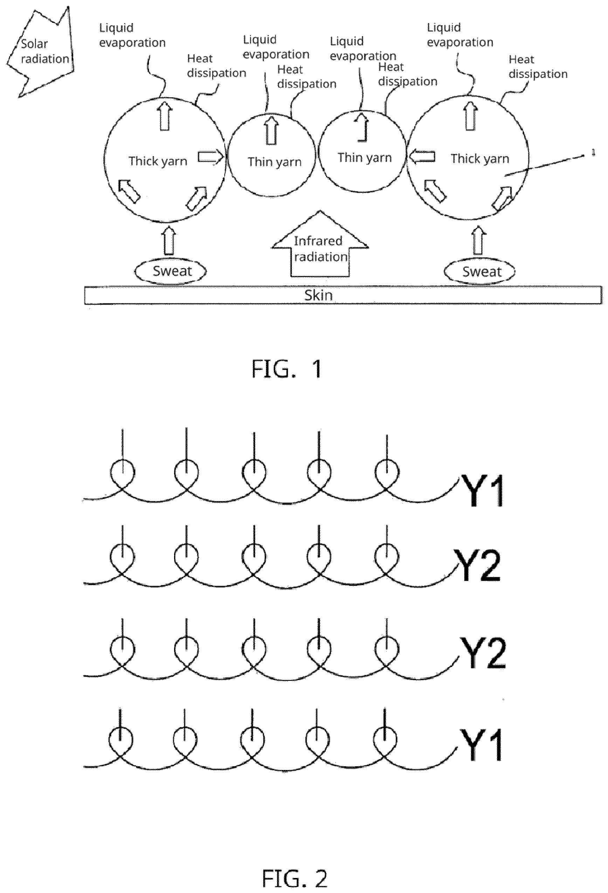

As shown in Figure 1, the infrared light-absorbing and heating yarn can receive infrared radiation from the environment or the human body regardless of whether it is on the skin or clothing surface of the fabric. At the same time, because the yarn is divided into thickness, when there is sweat on the skin surface.At this time, the thick yarn has a greater chance of contact with liquid and transfer occurs, and the fine yarn has a lower chance of contacting the skin. Therefore, the liquid water will diffuse through the thick yarn to the fine yarn; the liquid water on the fabric surface will evaporate in the roving and the fine yarn together, so the moisture evaporation of the structured fabric creates a difference on both sides of the fabric, resulting in liquid water on both surfaces of the fabric The difference is passed between. Another advantage is that because the roving is separated by the fine yarn, the water on the skin can be diffused through the fine yarn, thereby reducing the chance of skin contact with the moistened yarn and improving the feeling of dryness.

Based on the above analysis, the present application discloses a multi-scene heat and moisture comfort functional knitted fabric, which includes a fabric body including at least two yarns: (1)Y1 first yarn (denier D1, filaments F1) and (2)Y2 second yarn thread (denier D2, and filament F2), and one of the yarns is a light-absorbing heat-generating yarn;Y1 the denier of the first yarn is inconsistent withY2 the denier of the second yarn, and it is divided into roving yarn and spun yarn; the roving yarn and the spun yarn are made of DThick:DFine ≥ 1.2, FThick:FFine ≤ 0.9 yarn (ie: high-filament yarn The thread has a small denier); and the roving yarn and the spun yarn in a unit cycle organization are arranged at intervals of the ratio of 2.0≥mthick:nfine≥0.3, and mthick≤2.0, nfine≤6.0 ( In the formula, m is a yarn with a thick denier and n is a yarn with a fine denier); woven into a thermal comfort function that can absorb and convert radiation energy into heat energy and the one way transfer capacity on both sides of the liquid water fabric≥100% of the fast-drying fabric body.

The light-absorbing and heat-generating yarn can be used for roving or spun yarn in the fabric designed in this application, and can be applied to the outer surface of the fabric or the inner surface of the fabric according to the different fabric structure.

The design of the fabric structure can make the infrared light-absorbing and heating yarns distributed in the fabric on both sides of the fabric, or only on one side. For underwear products, it is preferably applied to the inner surface, and for outer jacket fabrics, it is preferably applied to the outer surface to help more effectively absorb infrared radiation energy from the human body or the sun.

The light-absorbing heating yarn is made of acrylic, polyester or nylon yarns that have the function of light-absorbing and heating by adding light-absorbing substances, or blended yarns of the above materials and other fibers and cotton, which are characterized by being made by comparing ordinary polyester yarns with the same specifications. For weft-knitted plain weave fabric, the fabric of the same specification of the light-absorbing and heating yarn refers to the GB/T 18319-2019 standard, and the average temperature of the light for 20 minutes is at least 1.5°C higher than that of the polyester reference sample.

As a further solution, the content of the light-absorbing and heat-generating yarn in the fabric is greater than 10%, and preferably the content of the light-absorbing and heat-generating yarn in the fabric is greater than 25%.

As a further solution, the light-absorbing and heat-generating yarn is on a surface of the fabric body, and the coverage is greater than 20%, preferably the coverage is greater than 30%.

As a further solution, the light-absorbing heat-generating yarn is acrylic, polyester or nylon yarns that achieve light-absorbing and heat-generating functions by adding light-absorbing substances, or blended yarns of the above materials, preferably infrared light-absorbing heat-generating yarns and full-spectrum heat-absorbing yarns. In order to ensure that the light-absorbing and heat-generating yarn has the effect of heating up and keeping warm and accelerating evaporation in the final product, the yarn is required to have a surface coverage of more than 20%, preferably 30%, or more than 25% in the fabric. As a result, the infrared light-absorbing heating yarn can effectively absorb radiant energy in the fabric and convert the radiation into heat energy to achieve the effect of raising the temperature of the fabric.

In order to further control the transfer of liquid water in the fabric, reduce the concentration of moisture on the skin surface and improve the dry feeling of the skin, the liquid water capillary transfer capacity of the yarn and the geometric characteristics of the yarn are required as follows:

The fabric structure requires the thick and thin yarns to be arranged at intervals. Taking the basic weft-knitted plain weave fabric structure as an example, the roving yarn and the spun yarn are arranged at intervals of 2.0≥m_{thick}: n_{thick}≥0.3, and m_{thick}≤2.0, n_{thick}≤ 6.0.

As a further solution, the ratio of the yarn water-conducting capacity of the roving to the yarn water-conducting capacity of the spun yarn is LP_{Fine}: LP_{Thick}≥ 1.2, and D_{Thick}: D_{Fine} ≥ 1.2, F_{Thick}: F_{Fine} ≤ 0.9.

As a further solution, the structure may be a weft-knitted plain weave: the first yarn is roving, and m_{thick} is a light-absorbing heat-generating yarn; or the second yarn is fine yarn, and n is a light-absorbing heat-generating yarn.

As a further solution, the structure can be a basic double-sided structure (Interlock): the first yarn is a roving, and the m_{thick} uses a light-absorbing heating yarn, and the light-absorbing heating yarn is distributed on both the inner and outer sides of the fabric body; or The second yarn is a spun yarn, and the n-thin adopts a light-absorbing and heating yarn, and the light-absorbing and heating yarn is distributed on both the inner and outer sides of the fabric body. In the same way, the fabric structure can be further extended to double-sided and spacer fabrics. As a further solution, at least one side of the fabric body is subjected to hair effect treatments such as brushing, sanding, and fuzzing, so as to improve the warmth retention characteristics and feel of the fabric.

Therefore, the fabric described in this application has the following functional characteristics: its unidirectional moisture conductivity OWTC ≥ 100% (AATCC 195, GB 21655.2); liquid evaporation rate for synthetic fiber fabrics ≥ 1.0 ml/h; liquid evaporation rate for cellulose fiber blending Fabric ≥0.5ml/h (AATCC 201).

Therefore, the fabric body has the following different functions during the wearing process: the fabric body absorbs and converts radiant energy into heat energy, and at the same time uses the generated heat energy to increase the temperature of the fabric surface; at the same time, it has the function of wet comfort: the difference between the two sides of the liquid water fabric The function of chemical transfer and quick-drying; the fabric has the following different functions during the wearing process: in the low metabolism stage, reduce the loss of heat in the form of radiation, and convert it into heat energy to increase the warmth retention effect of the fabric unit thickness; in the high metabolism stage, The differential moisture conductivity of the fabric facilitates the drainage of sweat from the surface of the fabric to the surface of the fabric, improves the dryness of the fabric inner bottom, and uses a higher fabric surface temperature to increase the evaporation rate of liquid water; the differential conductivity is used in the recovery phase after exercise. Wetting and increasing the temperature of the fabric are more conducive to shorten the drying process of the fabric to reduce the uncomfortable feeling of wet and cold after exercise.

### BRIEF DESCRIPTION OF DRAWINGS

FIG. 1 is a schematic diagram of functional fabrics with thermal and moisture comfort.
FIG. 2 is a knitting diagram of Example 1.
FIG. 3 is a comparative test curve of the optical heat storage performance of the present application in Example 1. FIG.
FIG. 4 is a knitting diagram of Example 2.

### DETAILED DESCRIPTION OF EMBODIMENTS OF THE INVENTION

The technical solutions in the embodiments of the present application will be described clearly and completely in conjunction with the accompanying drawings in the embodiments of the present application. Obviously, the described embodiments are only a part of the embodiments of the present application, rather than all the embodiments. Based on the embodiments in this application, all other embodiments obtained by those of ordinary skill in the art without creative work fall within the protection scope of this application. Please refer to FIGs. 1 to 4.

### Example 1:

The fabric body is woven by the first yarn Y1: polyester 75D/30F roving and the second yarn Y2: polyester 50D/60F spun yarn to form a single-sided plain weave fabric. Among them, the roving-first yarn Y1:75D/30F polyester, and the spun yarn-second yarn Y2:50D/60F polyester adopt light-absorbing and heating yarns. The ratio of the water-conducting capacity of the roving yarn to the water-conducting capacity of the spun yarn is LP_{Fine}: LP_{coarse} ≥ 1.2, and D_{coarse}: D_{Fine} = 1.5, which satisfies the condition of greater than (≥) 1.2, F_{coarse}: F_{Fine} = 0.5, which satisfies the condition of less than (≤) 0.9. Roving and spun yarns are arranged at intervals of a ratio of 2.0≥m_{thick}:n_{fine}≥0.3 in a unit circulation structure. In this embodiment, m_{thick}=1 and n_{fine}=1 to form a multi-scene thermal comfort function and the one way transfer capacity on both sides of the liquid water fabric≥100%. At this time, the content of the light-absorbing heating yarn in the main body of the fabric is 72%, and the coverage rate of the light-absorbing heating yarn on both surfaces of the main body of the fabric is 52%.

According to the GBIT 18319-2019 standard, the heat storage test is carried out for 20 minutes and the comparison is as follows:

Comparative sample: The first yarn Y1 and the second yarn Y2 are both plain weft knitted fabrics woven with polyester 75D/30F roving. The data is as

| Test time ( m in ) | Clothing surface | Skin surface | Test time (m in ) | Clothing surface | Skin surface | Test time (m in ) | Clothing surface | Skin surface |
|---|---|---|---|---|---|---|---|---|
| 0 | 25.4 | 25.2 | 7 | 30.1 | 29.7 | 14 | 29.7 | 29.6 |
| 1 | 28.3 | 28.6 | 8 | 30.0 | 29.4 | 15 | 30.1 | 29.6 |
| 2 | 29.3 | 29.2 | 9 | 30.2 | 29.9 | 16 | 30.1 | 29.5 |
| 3 | 29.8 | 29.4 | 10 | 30.0 | 29.6 | 17 | 30.0 | 29.4 |
| 4 | 29.6 | 29.4 | 11 | 30.1 | 29.6 | 18 | 29.8 | 29.2 |
| 5 | 30.0 | 29.6 | 12 | 30.0 | 29.7 | 19 | 29.7 | 29.4 |
| 6 | 30.2 | 29.8 | 13 | 29.6 | 29.3 | 20 | 30.0 | 29.6 |

follows:
The heat storage test data of Example 1 of this application is as follows:

| Test time ( min ) | Clothing surface | Skin surface | Test time (m in ) | Clothing surface | Skin surface | Test time (m in ) | Clothing surface | Skin surface |
|---|---|---|---|---|---|---|---|---|
| 0 | 25.2 | 25.0 | 7 | 32.2 | 32.0 | 14 | 32.3 | 32.0 |
| 1 | 30.5 | 30.3 | 8 | 32.6 | 32.3 | 15 | 32.5 | 32.0 |
| 2 | 31.6 | 31.3 | 9 | 32.4 | 32.2 | 16 | 32.4 | 32.1 |
| 3 | 31.8 | 31.5 | 10 | 32.5 | 32.1 | 17 | 32.3 | 32.1 |
| 4 | 32.0 | 31.8 | 11 | 32.5 | 32.3 | 18 | 32.6 | 32.2 |
| 5 | 32.3 | 31.9 | 12 | 32.6 | 32.3 | 19 | 32.4 | 32.0 |
| 6 | 32.2 | 31.9 | 13 | 32.5 | 32.1 | 20 | 32.5 | 32.1 |

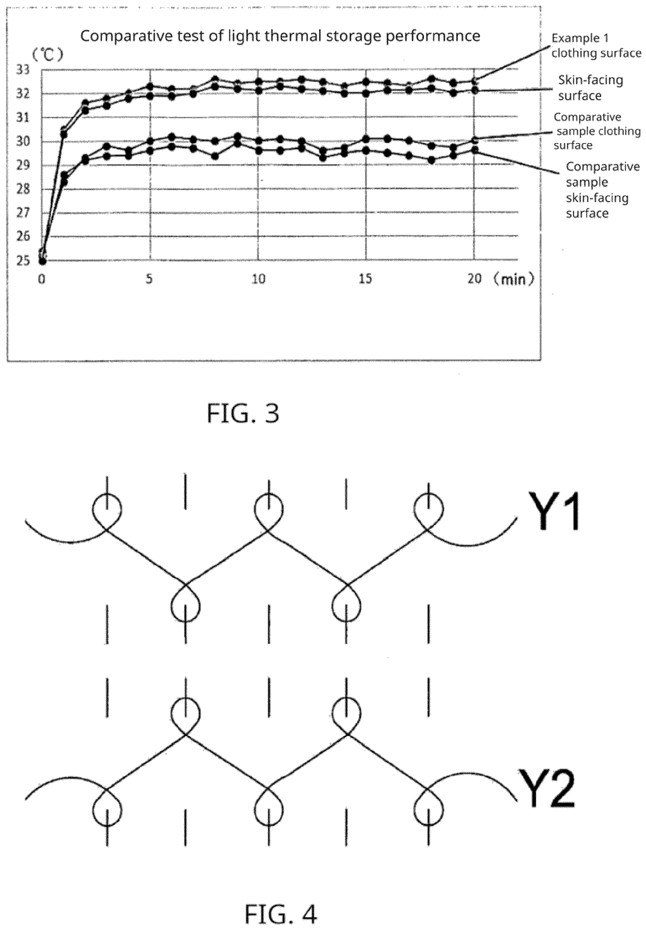

It can be seen from the above experimental data (shown in Figure 4) that the performance of the yarn is determined with a plain weft knitting structure, and the weft knitting plain fabric made from ordinary polyester yarns of the same specification is compared. The light-absorbing and heating yarns of the same specification fabrics refer to GB/T. The 18319-2019 standard illumination lasts for 20 minutes and the average temperature rises up to 2.5°C compared with the temperature of the polyester reference sample, which meets the requirement of at least 1.5°C higher.

Because the light-absorbing and heating yarn can receive the light radiation from the environment or the human body no matter it is on the skin side of the fabric or the clothing side. The fabric body absorbs and converts the radiant energy into heat energy, and at the same time uses the generated heat energy to increase the temperature of the surface of the fabric body.

At the same time, since the yarn is divided into thickness, when there is sweat on the surface of the skin, the thick yarn has a greater chance of contacting the liquid to transfer, and the fine yarn has a lower chance of contacting the skin. Therefore, the liquid water will diffuse through the thick yarn to the fine yarn; the liquid water on the fabric surface will evaporate in the roving and the fine yarn together, so the moisture evaporation of the structured fabric creates a difference on both sides of the fabric, resulting in liquid water on both surfaces of the fabric The difference is passed between. Another advantage is that because the roving is separated by the fine yarn, the water needs to be diffused through the fine yarn on the skin surface, thereby reducing the chance of skin contact with the wetted yarn and improving the feeling of dryness, realizing the function of differential transmission and quick-drying of the liquid water fabric on both sides.

In this example, the knitted fabric is measured according to the standard AATCC 195 "Liquid Moisture Management Properties of Textile Fabrics". The OWTC (one way transport capability) of the fabric body measured this time is 205%.

In this example, the liquid water evaporation rate of the knitted fabric tested according to the standard AATCC 201 is 1.32ml/hr.

### Example 2:

The fabric body is woven by the first yarn Y₁: polyester 50D/48F roving and the second yarn Y₂: polyester 40D/72F spun yarn to form a double-sided plain weave fabric. Among them, the roving-first yarn Y₁:50D/48F polyester, and the spun yarn-first yarn Y₂:40D/72F polyester adopts light-absorbing and heating yarn. In this example: the ratio of the water-conducting capacity of the roving yarn to the water-conducting capacity of the spun yarn is LP_{Fine}: LP_{coarse} ≥ 1.2, and D_{coarse}: D_{Fine} ≥ 1.2, F_{coarse}: F_{Fine} ≤ 0.9. Roving and spun yarns are arranged at intervals of 2.0≥m_{thick}:n_{fine}≥0.3 in a unit circulation structure. In this embodiment, m_{thick}=1 and n_{fine}=1, forming a difference between the thermal comfort function and the one way transfer capacity on both sides of the liquid water fabric≥100%.At this time, the content of the light-absorbing heating yarn in the main body of the fabric is 68%, and the coverage rate of the light-absorbing heating yarn on both surfaces of the main body of the fabric is 48%.

In this example, the knitted fabric is measured according to the standard AATCC 195 "Liquid Moisture Management Properties of Textile Fabrics". The one way transport capability of the fabric body measured this time is 270%. In this example, the liquid water evaporation rate of the knitted fabric tested according to the standard AATCC 201 is 1.21ml/hr.

Similarly, refer to the GB/T 18319-2019 standard for 20-minute heat storage test comparison. Because the light-absorbing and heating yarn can receive the light radiation from the environment or the human body no matter it is on the skin side of the fabric or the clothing side. The fabric body absorbs radiant energy and converts it into heat energy, and at the same time uses the generated heat energy to increase the surface temperature of the fabric body. Compared with the weft knitted plain fabric made of ordinary polyester yarn of the same specification, the fabric of the same specification of light-absorbing heating yarn refers to GB/T 18319 -2019 Standard 20-minute average temperature is at least 1.5□ higher than the polyester reference sample.

In summary, the fabric body has the following different functions during the wearing process: in the low metabolism stage, it reduces the heat loss in the form of radiation, and converts it into heat energy to increase the warmth retention effect of the fabric unit thickness; in the high metabolism stage, the fabric Differential moisture conductivity facilitates the drainage of sweat from the body surface to the surface of the fabric, improves the dryness of the fabric insole, and increases the evaporation rate of liquid water at the same time; it is more conducive to shorten the drying process of the fabric by using differential moisture conductivity and increasing the fabric temperature in the recovery phase after exercise. Reduce the uncomfortable feeling of clammy after exercise.

In addition, it should be understood that although this specification is described in accordance with the implementation modes, not each implementation mode only includes an independent technical solution. This narration in the specification is only for clarity, and those skilled in the art should regard the specification as a whole The technical solutions in the various embodiments can also be appropriately combined to form other implementations that can be understood by those skilled in the art.

## Claims

1. A multi-scene, thermal and moisture-comfortable functional knitted fabric, comprising a fabric body which has a the clothing surface and the skin surface, **characterized in that** the fabric body includes at least two yarns: (1)Y₁ the first yarn and (2)Y₂ the second yarn, and one of the yarns is a light-absorbing heat-generating yarn;Y₁ the denier of the first yarn is inconsistent withY₂ the denier of the second yarn, and it is divided into roving yarn and spun yarn; the roving yarn and the spun yarn are made of D_{thick}:D_{fine} ≥ 1.2, F_{thick}:F_{fine} ≤ 0.9; D_{thick} is the denier of the roving, D_{fine} is the denier of the spun yarn, and F_{thick} is the filament number of the roving, F_{fine} is the filament number of the spun yarn,and the roving yarn and the spun yarn in a unit cycle organization are arranged at intervals of the ratio of 2.0≥m_{thick}:n_{fine}≥0.3, and m_{thick}≤2.0, n_{fine}≤6.0; m_{thick} is a yarn with a thick denier and nfine is a yarn with a fine denier; woven into a thermal comfort function that can absorb and convert radiation energy into heat energy and the one way transfer capacity on both sides of the liquid water fabric ( OWTC) ≥100% of the fast-drying fabric body.

2. The multi-scene, thermal and moisture-comfortable functional knitted fabric according to claim 1, wherein the ratio of the water-conducting capacity of the roving yarn to the water-conducting capacity of the spun yarn is LP_{fine}: LP_{thick}≥ 1.2.

3. The multi-scene, thermal and moisture-comfortable functional knitted fabric according to claim 1 or 2, **characterized in that** the structure can be weft-knitted plain weave, the first yarn Y₁ is roving, and m_{thick} is made of light-absorbing and heating yarn; or the second yarn Y₂ is a spun yarn, and the light-absorbing and heat-generating yarn is used for n_{fine}.

4. The multi-scene, thermal and moisture-comfortable functional knitted fabric according to claim 1 or 2, **characterized in that** the structure can be a basic double-sided structure, the first yarn Y₁ is roving, and m_{thick} is made of light-absorbing and heating yarn, so the light-absorbing heat-generating yarn is distributed on the clothing surface and the skin surface of the fabric body; or the second yarn Y₂ is a spun yarn, and the light-absorbing heat-generating yarn is used for n_{fine}, and the light-absorbing and heat-generating yarn is distributed on the clothing of the fabric body face and skin-attached face.

5. The multi-scene, thermal and moisture-comfortable functional knitted fabric according to any one of claims 1 to 4, wherein the content of the light-absorbing and heating yarn in the fabric is greater than 10%, preferably the content of the light-absorbing and heating yarn in the fabric is greater than 25 %.

6. The multi-scene, thermal and moisture-comfortable functional knitted fabric according to claim 5, wherein the light-absorbing and heating yarn is on the clothing or skin side of the fabric body, and the coverage rate is greater than 20%, preferably the coverage rage of the light-absorbing and heating yarn in the fabric is more than 30%.

7. The multi-scene, thermal and moisture-comfortable functional knitted fabric according to any one of claims 1-6, wherein the light-absorbing and heating yarn is acrylic, polyester, nylon or other yarns that achieve light-absorbing and heating functions by adding light-absorbing substances or Blended yarn of the above materials.

8. The multi-scene, thermal and moisture-comfortable functional knitted fabric according to claim 1 or 7, **characterized in that** at least one side of the fabric body is treated with bristles, brushing and fuzzing, so as to improve the warmth retention characteristics and hand feeling of the fabric.

9. The multi-scene, thermal and moisture-comfortable functional knitted fabric according to claim 1 or 7, its one way transfer capacity OWTC ≥ 100% (AATCC 195, GB 21655.2); the liquid evaporation rate is ≥ 1.0 ml/hr for synthetic fiber fabrics, and the liquid evaporates rate of cellulose fiber blended fabric is ≥0.5ml/hr (AATCC 201).
